Europäisches Patentamt

European Patent Office

Office européen des brevets

(19)

(11) Numéro de publication : **0 071 501**
**B1**

(12) # FASCICULE DE BREVET EUROPÉEN

(45) Date de publication du fascicule du brevet :
**18.09.85**

(51) Int. Cl.⁴ : **F 16 D 43/26, F 16 D 41/10,
G 01 P 13/02**

(21) Numéro de dépôt : **82401289.2**

(22) Date de dépôt : **08.07.82**

(54) Embrayage à entraînement angulaire limité, pour coupler à un arbre moteur un moyen de commande auxiliaire à deux positions suivant le sens de rotation de l'arbre.

(30) Priorité : **23.07.81 FR 8114340**

(43) Date de publication de la demande :
**09.02.83 Bulletin 83/06**

(45) Mention de la délivrance du brevet :
**18.09.85 Bulletin 85/38**

(84) Etats contractants désignés :
**AT BE CH DE GB IT LI LU NL SE**

(56) Documents cités :
**DE-C- 882 778
DE-C- 931 379
FR-A- 2 411 672
GB-A- 747 921
US-A- 1 529 248**

(73) Titulaire : **MORS**
**4 avenue Velasquez**
**F-75008 Paris (FR)**

(72) Inventeur : **Baguena, Manuel**
**62 Avenue Aristide Briand Paron**
**F-89100 Sens (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

L'invention se rapporte à un embrayage à entraînement angulaire limité, destiné à coupler, à un arbre moteur d'un moyen d'action à deux sens de rotation, un moyen de commande auxiliaire à deux positions et coopérant avec le moyen d'action, chaque position du moyen de commande définissant un mode de coopération en correspondance avec un sens de rotation déterminé de l'arbre moteur, en sorte que la mise en rotation de l'arbre moteur dans un sens entraîne la mise en position correspondante du moyen de commande.

La demande de brevet français n° 77 37510, déposée par la Demanderesse le 13 décembre 1977, a trait à un ensemble autonome de commande hydraulique, notamment pour mors mobile d'un étau pour la fixation d'une pièce en position précise sur une machine-outil, cet ensemble comprenant une pompe hydraulique à deux étages, un étage pour l'avance rapide et un étage pour la montée en pression, un moteur électrique à double sens de rotation entraînant la pompe, un pressostat réglable, un vérin à simple effet et un clapet de décharge. Dans un sens de rotation la pompe refoule dans le vérin qui serre l'étau ; le début de serrage de la pièce entraîne une montée en pression du vérin ; la pression atteignant une certaine valeur, l'étage basse pression est court-circuité par le clapet de décharge, tandis que l'étage haute pression parfait le serrage ; puis le moteur est arrêté ou relancé pour maintenir en pression, déterminée par le pressostat réglable, le vérin. La mise en rotation inverse du moteur ouvre un second clapet de décharge, branché sur le vérin, afin que l'étau soit desserré. L'intérêt de la commande d'étau telle qu'elle vient d'être rappelée, réside dans la facilité de couplage à un appareillage de commande automatique de cycles d'usinage, les serrage et desserrage étant obtenus respectivement en réponse à deux signaux logiques.

L'embrayage selon l'invention a été mis au point pour s'insérer dans un tel ensemble hydraulique autonome, pour commander la fermeture ou l'ouverture du clapet de décharge de vérin, suivant le sens de rotation du moteur.

Pour faire passer le clapet d'une position d'ouverture à une position de fermeture en réponse à la rotation du moteur dans un premier sens, et de la position de fermeture à la position d'ouverture en réponse à la rotation du moteur en sens inverse, on doit solidariser la commande de clapet sur un angle correspondant au changement de position, à l'arbre du moteur, l'embrayage se relâchant après que l'angle ait été décrit. On a utilisé dans ce but des frictions à couple limité, conjointement avec des butées. Les dispositifs à friction, en patinage pratiquement permanent, ont tendance à chauffer et à s'user, de sorte que le couple limite varie ; ces dispositifs à friction présentent une mauvaise fiabilité.

L'invention a pour objet un embrayage à entraînement angulaire limité fiable, et propose à cet effet un embrayage à entraînement angulaire limité, destiné à coupler, à un arbre moteur d'un moyen d'action à deux sens de rotation, un moyen de commande auxiliaire à deux positions et coopérant avec le moyen d'action, chaque position du moyen de commande définissant un mode de coopération en correspondance avec un sens de rotation déterminé de l'arbre moteur, en sorte que la mise en rotation de l'arbre moteur dans un sens entraîne la mise en position correspondante du moyen de commande, embrayage caractérisé en ce qu'il comprend un bloc fixe traversé librement par l'arbre moteur, une couronne agissant sur ledit moyen de commande et montée pivotante dans le bloc coaxialement à l'arbre-moteur, deux moyens de coincement disposés au contact de l'arbre-moteur dans des logements de la couronne, ces logements se raccordant chacun par une rampe, apte à coopérer avec le moyen de coincement adjacent, à un arc cylindrique coaxial à l'arbre et définissant avec celui-ci un espace en segment annulaire d'épaisseur radiale inférieure à l'épaisseur des moyens de coincement et un doigt de butée solidaire du bloc et pénétrant dans l'espace en segment annulaire, en sorte que l'arrêt sur le doigt de butée d'un moyen de coincement engagé contre la rampe adjacente en réponse à l'entraînement par l'arbre-moteur, définisse la position de la couronne correspondant au sens de rotation de l'arbre.

Lorsque le sens de rotation de l'arbre-moteur est tel que cet arbre sollicite un des moyens de coincement contre la rampe adjacente, ce moyen de coincement se force en coin entre l'arbre et la couronne, entraînant celle-ci en solidarité avec l'arbre, jusqu'à ce que le moyen de coincement vienne au contact du doigt de butée ; à ce moment, la couronne étant en première position, le moyen de coincement est arrêté d'un coup, ce qui libère la rampe de couronne, et par voie de conséquence dégage l'arbre-moteur du moyen de coincement. Une mise en rotation de l'arbre en sens inverse sollicite le second moyen de coincement contre la rampe adjacente, et la couronne est entraînée jusqu'en seconde position.

De préférence, les logements de couronne sont munis de moyens élastiques sollicitant les moyens de coincement respectifs vers les rampes adjacentes, de sorte que l'embrayage soit franc au départ en rotation de l'arbre-moteur.

En disposition préférée les moyens de coincement sont constitués par des galets cylindriques. Ceux-ci, en contact avec l'arbre, sont mis en rotation, cette rotation ayant pour effet, dans un sens d'engager un galet en roulement sous la rampe adjacente, grâce à quoi le coincement est autoserrant, et dans l'autre sens de dégager le galet de la rampe. En outre le galet libère du coincement entre l'arbre et la rampe adjacente est en frottement roulant et non strictement glissant, et risque moins l'usure et les grippages.

Les caractéristiques et avantages de l'invention ressortiront d'ailleurs de la description qui va suivre à titre d'exemple, en référence aux dessins annexés dans lesquels :

la figure 1 représente un embrayage selon l'invention, en vue de bout partiellement arrachée ;

la figure 2 représente le même embrayage en vue axiale, partiellement coupée ;

les figures 3A et 3B sont des schémas de fonctionnement.

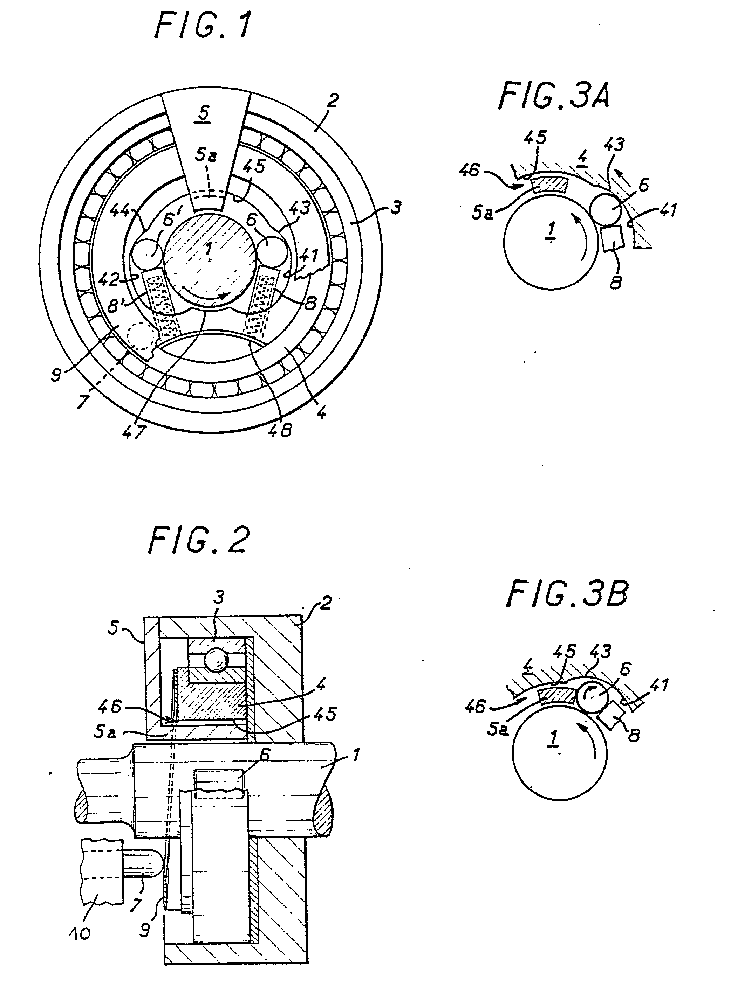

Selon la forme de réalisation choisie et représentée figures 1 et 2, l'embrayage comporte, autour d'un arbre-moteur 1 avec une portée cylindrique rectifiée, un corps 2 qui est solidaire du bâti d'un ensemble hydraulique pour le serrage d'un étau de machine-outil. Dans le corps 2 est logé un roulement à billes 3, dans l'alésage de bague intérieure duquel est emmanchée une couronne 4 avec une bride 40. La face frontale de la bride 40 est à taille hélicoïdale pour former came 9 pour un poussoir 7 de clapet de décharge 10. La partie centrale de la couronne 4 comporte deux logements 41 et 42 vers l'arbre 1, dans lesquels sont insérés des galets cylindriques 6 et 6', portant sur l'arbre 1. Les logements 41 et 42 se raccordent à un arc cylindrique 45 qui définit avec l'arbre 1 un espace en segment annulaire 46 d'épaisseur inférieure au diamètre des galets 6, 6', par deux rampes en spirale respectivement 43 et 44. Un doigt de butée 5a, à l'extrémité d'un secteur 5 fixé au corps, pénètre dans le segment 46, sans toucher ni l'arbre 1, ni la couronne 4.

La couronne 4 se complète, entre les logements 41 et 42, par un pont 47 à l'opposé de l'arc 45. Dans ce pont 47 sont ménagés des logements pour des poussoirs 8 et 8', équipés de ressorts pour solliciter les galets 6 et 6', respectivement vers les rampes 43 et 44, les ressorts prenant appui sur une plaque arquée 48.

Comme on va l'expliquer maintenant, la position d'embrayage représentée aux figures 1 et 2 est essentiellement instable. En effet, l'arbre-moteur 1 étant supposé tourner dans le sens inverse des aiguilles d'une montre suivant la flèche (figure 1), les galets 6 et 6' sont sollicités, par contact avec l'arbre 1, à tourner dans le sens des aiguilles d'une montre. Par réaction sur les parois de logements 41 et 42, les galets 6 et 6' auraient tendance à tourner autour de l'axe de l'arbre 1, avec une vitesse de rotation égale à la moitié de celle de cet arbre 1. Il en résulte que, pour le sens de rotation indiqué le galet 6 se coince entre la rampe 43 et l'arbre 1, tandis que le galet 6' se dégage de la rampe 44.

La suite du fonctionnement s'expliquera mieux en se reportant aux figures 3A et 3B. Le coincement du galet 6 entre l'arbre 1 et la rampe 43 provoque une solidarisation des trois pièces, arbre, galet et couronne, le galet 6 et la couronne 4 étant entraînés en rotation (figure 3A) jusqu'à ce que le galet 6 vienne buter sur le doigt 5a (figure 3B).

La couronne 4 ne peut plus être entraînée par le galet 6, arrêté par le doigt 5a, mais le choc de l'arrêt décoince le galet 6. Mais, dans cette position, la couronne 4 est en équilibre stable, les galets 6 et 6', sollicités en rotation par l'arbre 1, sollicitant à leur tour la couronne 4 en antagonisme, l'équilibre entre les sollicitations étant rompu lorsque la couronne 4 s'écarte de la position où le galet 6 quitte la rampe 43, dans le sens qui ramène à cette position.

On a compris que, lorsque l'arbre 1 tourne dans le sens des aiguilles d'une montre, le galet 6' se coince sous la rampe 44 jusqu'à ce qu'il vienne frapper le doigt de butée 5a, la couronne 4 prenant alors une position telle que la rampe 44 soit à proximité du doigt de butée 5a.

Selon la représentation de la figure 2, la couronne 4 porte une rampe hélicoïdale 9 sur sa face frontale. Un poussoir 7 d'un clapet de décharge, évoqué par la référence 10, porte sur la rampe 9. On aura compris que, selon que la rampe 43 ou la rampe 44 est venue à proximité du doigt de butée 5a, le poussoir 7 est avancé ou repoussé, c'est-à-dire que le clapet 10 est fermé ou ouvert.

Cette disposition correspond à l'incorporation de l'embrayage dans un ensemble autonome de commande hydraulique d'étau, le clapet 10 étant en dérivation sur le vérin de serrage de l'étau, tandis que l'arbre 1 entraîne les pompes haute et basse pression ; l'inversion du sens de rotation de l'arbre 1, obtenue électriquement, provoque le serrage ou le desserrage de l'étau.

**Revendications**

1. Embrayage à entraînement angulaire limité, destiné à coupler, à un arbre moteur (1) d'un moyen d'action à deux sens de rotation, un moyen de commande (7, 10) auxiliaire à deux positions et coopérant avec le moyen d'action, chaque position du moyen de commande (7) définissant un mode de coopération en correspondance avec un sens de rotation déterminé de l'arbre-moteur (1), en sorte que la mise en rotation de l'arbre-moteur dans un sens entraîne la mise en position correspondante du moyen de commande, embrayage caractérisé en ce qu'il comprend un bloc fixe (2) traversé librement par l'arbre-moteur (1), une couronne (4) agissant sur ledit moyen de commande (7, 10) et montée pivotante dans le bloc (2) coaxialement à l'arbre-moteur (1), deux moyens de coincement (6, 6') disposés au contact de l'arbre-moteur (1) dans des logements (41, 42) de la couronne (4), ces logements (41, 42) se raccordant chacun par une rampe (43, 44), apte à coopérer avec le moyen de coincement (6, 6') adjacent, à un arc cylindrique (45) coaxial à l'arbre et définissant avec celui-ci un espace en segment annulaire d'épaisseur radiale inférieure à l'épaisseur des moyens de coincement (6, 6') et un doigt de butée (5a) solidaire du bloc (2) et pénétrant dans l'espace en segment annulaire (46), en sorte que l'arrêt sur le doigt de butée (5a) d'un moyen de coincement (6, 6') engagé contre la rampe adjacente (43, 44), en réponse à l'entraînement par l'arbre-moteur, définisse la position de la couronne (4) correspondant au sens de rotation de l'arbre (1).

2. Embrayage selon la revendication 1, caractérisé en ce que les logements (41, 42) dans la couronne (4) sont munis de moyens élastiques (8, 8') sollicitant les moyens de coincement respectifs (6, 6') vers les rampes adjacentes (43, 44).

3. Embrayage selon une des revendications 1 ou 2, caractérisé en ce que les moyens de coincement (6, 6') sont constitués par des galets cylindriques.

4. Embrayage selon une quelconque des revendications 1 à 3, caractérisé en ce que la couronne (4) porte une came (9) hélicoïdale coaxiale à l'arbre-moteur (1), un poussoir longitudinal (7) portant sur la came couplant ledit moyen de commande (10) auxiliaire.

## Claims

1. Clutch with a limited angular actuation, intended for coupling to a drive shaft (1) of an active means with two directions of rotation an auxiliary control means (7, 10) having two positions and interacting with the active means, each position of the control means (7) defining an interaction mode appropriate for a specific direction of rotation of the drive shaft (1), so that the rotation of the drive shaft in one direction causes the corresponding positioning of the control means, the said clutch being characterized in that it comprises a fixed block (2), through which the drive shaft (1) passes freely, a ring (4) acting on the said control means (7, 10) and mounted pivotably in the block (2) coaxially relative to the drive shaft (1), wedging means (6, 6') arranged in contact with the drive shaft (1) in receptacles (41, 42) of the ring (4), these receptacles (41, 42) each being connected by means of a slope (43, 44), intended for interacting with the adjacent wedging means (6, 6'), to a cylindrical arc (45) coaxial relative to the shaft and defining with the latter a space in the form of an annular segment with a radial thickness less than the thickness of the wedging means (6, 6'), and a stop finger (5a) integral with the block (2) and penetrating into the space (46) in the form of an annular segment, so that when a wedging means (6, 6') engaged against the adjacent slope (43, 44) stops against the stop finger (5a) in response to the drive by the drive shaft, this defines the position of the ring (4) corresponding to the direction of rotation of the shaft (1).

2. Clutch according to Claim 1, characterized in that the receptacles (41, 42) in the ring (4) are provided with elastic means (8, 8') which stress the respective wedging means (6, 6') towards the adjacent slopes (43, 44).

3. Clutch according to either one of Claims 1 or 2, characterized in that the wedging means (6, 6') consist of cylindrical rollers.

4. Clutch according to any one of Claims 1 to 3, characterized in that the ring (4) carries a helical cam (9) coaxial relative to the drive shaft (1), and a longitudinal tappet (7) bearing on the cam couples the said auxiliary control means (10).

## Patentansprüche

1. Kupplung mit begrenztem Winkelantrieb, die dazu bestimmt ist, mit einer Antriebswelle (1) einer Aktionseinrichtung mit zwei Drehstellungen, eine Hilfssteuereinrichtung (7, 10) mit zwei Stellungen zu kuppeln, die mit der Aktionseinrichtung zusammenwirkt, wobei jede Stellung der Steuereinrichtung (7) eine Art und Weise des Zusammenwirkens entsprechend einem bestimmten Drehsinn der Antriebswelle (1) definiert, derart, daß bei Indrehungversetzen der Antriebswelle in der einen Richtung die Steuereinrichtung in entsprechende Stellung mitgenommen wird, dadurch gekennzeichnet, daß die Kupplung umfaßt : einen frei von der Motorwelle (1) durchsetzten festen Block (2), einen auf diese Steuereinrichtung (7, 10) wirkenden Ringkranz (4), der verschwenkbar im Block (2) koaxial zur Antriebswelle (1) gelagert ist ; zwei Klemmeinrichtungen (6, 6'), die in Kontakt mit der Antriebswelle (1) in Lagern (41, 42) des Ringkranzes (4) angeordnet sind, wobei diese Lager (41, 42) jeweils über eine Rampe (43, 44), die so ausgebildet ist, daß sie mit der benachbarten Klemmeinrichtung (6, 6') zusammenwirkt, mit einem zylindrischen Bogenstück (45) koaxial zur Welle verbunden sind und mit dieser einen Ringsegmentraum von einer radialen Dicke bilden, die geringer als die Dicke der Klemmeinrichtungen (6, 6') ist ; und ein fest mit dem Block (2) verbundener Anschlagsfinger (5a), der in den Ringsegmentraum (46) derart eintritt, daß bei Stillsetzen gegen den Anschlagfinger (5a) einer Klemmeinrichtung (6, 6'), der gegen die benachbarte Rampe (43, 44) abhängig von der Mitnahme durch die Antriebswelle greift, die Stellung des Ringkranzes (4) entsprechend der Drehrichtung der Welle (1) definiert.

2. Kupplung nach Anspruch 1, dadurch gekennzeichnet, daß diese Lager (41, 42) im Ringkranz (4) mit elastischen Einrichtungen (8, 8') versehen sind, welche die entsprechenden Klemmeinrichtungen (6, 6') gegen die benachbarten Rampen (43, 44) beaufschlagen.

3. Kupplung nach Anspruch 1 oder 2, dadurch gekennzeichnet, daß die Klemmeinrichtungen (6, 6') durch zylindrische Rollen gebildet sind.

4. Kupplung nach einem der Ansprüche 1 bis 3, dadurch gekennzeichnet, daß der Ringkranz (4) eine spiralförmige Nocke (9) koaxial zur Antriebswelle (1) trägt, wobei ein Längsstößel (7) gegen die Nocke anliegt und diese Hilfssteuereinrichtung (10) kuppelt.

## FIG.1

## FIG.3A

## FIG.2

## FIG.3B